Europäisches Patentamt

European Patent Office

Office européen des brevets

(19)

(11) Veröffentlichungsnummer· **0 028 595**
**B1**

(12)                    **EUROPÄISCHE PATENTSCHRIFT**

(45) Veröffentlichungstag der Patentschrift:
**19.09.84**

(51) Int. Cl.³: **B 23 P 1/08**

(21) Anmeldenummer: **79900485.8**

(22) Anmeldetag: **09.05.79**

(86) Internationale Anmeldenummer:
**PCT/CH 79/00067**

(87) Internationale Veröffentlichungsnummer:
**WO 80/02394 (13.11.80** Gazette 80/26)

(54) **ELEKTROEROSIVE SCHNEIDEMASCHINE ZUM ABSCHLIESSENDEN BEARBEITEN VON STANZ- UND SCHNEIDEWERKZEUGEN.**

(43) Veröffentlichungstag der Anmeldung:
**20.05.81 Patentblatt 81/20**

(45) Bekanntmachung des Hinweises auf die Patenterteilung:
**19.09.84 Patentblatt 84/38**

(84) Benannte Vertragsstaaten:
**CH DE FR GB SE**

(56) Entgegenhaltungen:
**FR - A - 2 342 121**
**FR - A - 2 387 727**
**US - A - 3 731 044**

(73) Patentinhaber: **A.G. FÜR INDUSTRIELLE ELEKTRONIK
AGIE LOSONE BEI LOCARNO, CH-6616 Losone (CH)**

(72) Erfinder: **Fricker, Paul, Via Muro della Rossa 26,
CH-6600 Locarno (CH)**

(74) Vertreter: **Grieskamp, Johannes Peter, Im
Baumgarten 7, CH-8123 Ebmatingen (CH)**

## Beschreibung

Die Erfindung betrifft eine erosive Schneidmaschine zum Schneiden an einem durch Werkstückhalter befestigten Werkstück, gemäß dem Oberbegriff des Patentanspruchs 1 (FR-A 2 387 727).

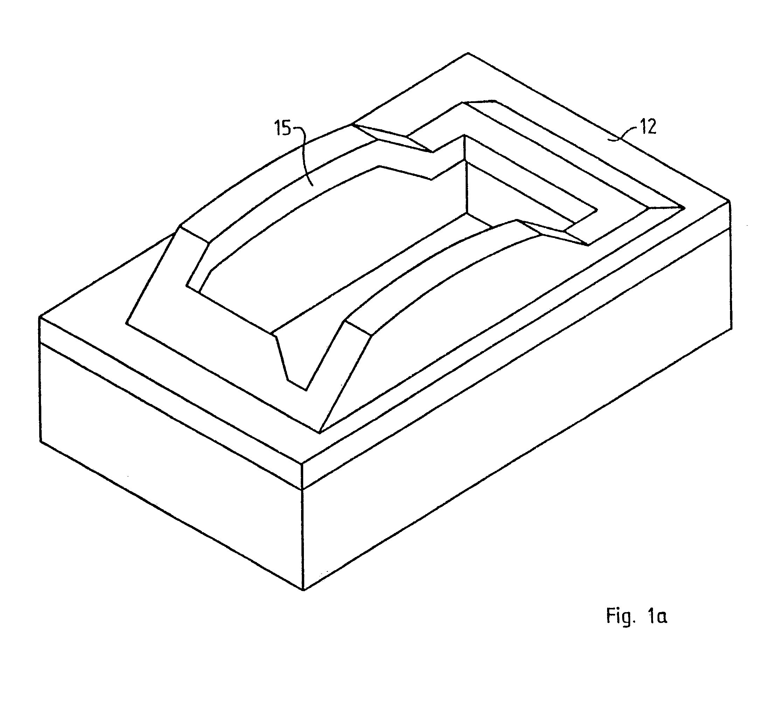

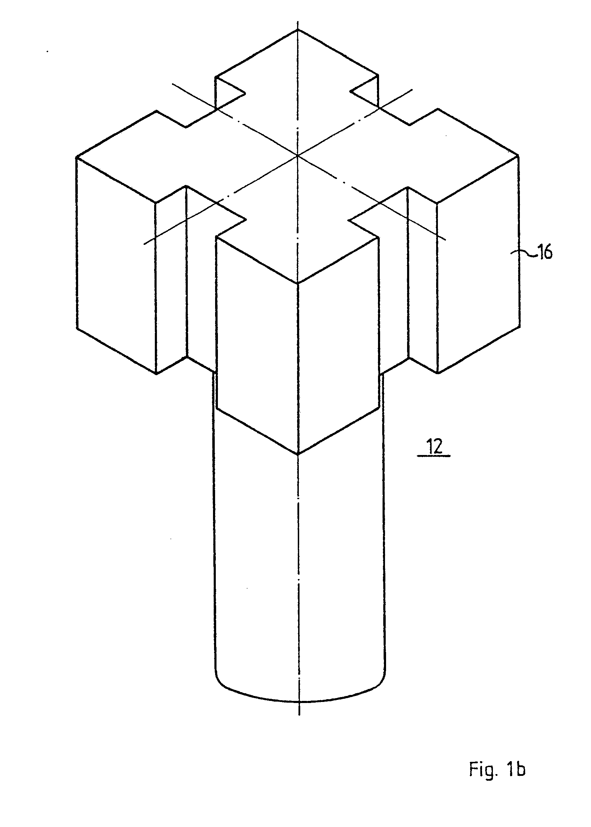

Geschlossene Werkstücke z. B. Stanzwerkzeuge oder Beschneidewerkzeuge haben in vielen Fällen die Eigenschaft, daß die mit der Elektrode zu schneidende Kontur von außen nicht erreichbar ist, weil die Wände des Werkstücks den Zugang der Elektrode und der die Elektrode tragenden Führungsmittel versperren. In der Fig. 1a ist ein solches Beschneidewerkzeug dargestellt. Die räumlichen Abmessungen betragen: Länge 3 m, Breite 2 m und Höhe 1,5 m. Ein solches Beschneidewerkzeug dient dazu, daß Blechteile wie z. B. Autokarosserien nach ihrer Formgebung beschnitten werden. Wie bekannt haben diese Blechteile nach ihrer Formgebung Material, das über die Formgrenzen hinausragt. Dieses Material muß in dem in Fig. 1a gezeigten Beschneidewerkzeug abgeschnitten werden. Die Herstellung eines solchen Beschneidewerkzeugs ist sehr schwierig, da die auszuschneidende Kontur eine geschlossene Innenform darstellt. Eine Erosionsmaschine könnte nur dann diese Kontur schneiden, wenn die Drahtführung besonders lang konstruiert würde. Dies bedeutet jedoch ein starkes Vibrieren der Elektrode während des Erosionsprozesses. Die verlangte Präzision wäre hiermit nicht mehr gewährleistet. Selbstverständlich kann das Beschneidewerkzeug kleinere räumliche Abmessungen haben wie das der Fig. 1a. Bei einem kleineren Werkzeug könnte eine erosive Schneidemaschine nicht einmal mit verlängerten Drahtführungsmitteln die geschlossene Innenform schneiden. In der Fig. 1b ist ein Stempel dargestellt, der eine geschlossene Außenform besitzt. Dieser Stempel kann entweder ein Stanzstempel oder ein Stempel zum Beschneiden sein. Die äußeren Abmessungen des Stempels können bis zu einigen Metern betragen. Die geschlossene Außenform des Stempels kann mit den bekannten Arbeitsmethoden nicht in einem Arbeitsgang bearbeitet werden, da der Stempel in einem Aufspannsystem fixiert ist und die Bearbeitungsmaschine, z. B. die erosive Schneidemaschine mit dem Aufspannsystem in Kollision kommen würde. Zur Vermeidung einer solchen Kollision kann die geschlossene Außenform nur immer teilweise bearbeitet werden. Danach muß der Stempel im Aufspannsystem umgespannt werden und anschließend folgt die neue Ausrichtung zwischen dem Stempel und der erosiven Elektrode. Die genannten Schwierigkeiten führten dazu, daß die Herstellung solcher Beschneidewerkzeuge und Stanzwerkzeuge zeitlich sehr aufwendig und arbeitstechnisch sehr kompliziert ist, was bekanntlich zu besonders hohen Unkosten führt.

Aus FR-A 2 387 727 ist eine Allzweck-Erosionsmaschine bekanntgeworden, die einen Wechseladapter für verschiedene Erosionselektroden aufweist. Bei dieser Maschine ist ein Werkzeugarm an einer Säule befestigt, wobei der Werkzeugarm verschiedene Werkzeuge aus einem Revolver aufnimmt. Der Werkzeugarm kann gegenüber feststehenden Anlagenteilen nicht verschoben werden. Die für die Drahtelektrode vorgesehenen Führungsmittel stehen mit einer Dreheinrichtung in Verbindung, deren Winkelposition um eine Drehachse einstellbar ist. Dabei hat die Drehachse mindestens einen Punkt mit der Elektrodenachse gemeinsam. An den Führungsmitteln sind Führungsmittelsupports vorgesehen. Ferner ist eine Verstelleinrichtung zur Voreinstellung von mit der Dreheinrichtung verbundenen Teilen längs einer Führungsachse vorgesehen, wobei diese Führungsachse parallel zur Drehachse verläuft. Die bekannte Einrichtung eignet sich zum Schneiden von Werkstücken mit konischer Geometrie und zum Schneiden von geschlossenen konischen Figuren. Aus FR-A 2 342 121 sowie aus US-A 3 731 044 ist es bekannt, zur Einstellung der Führungsmittel Kreuzschlitten zu verwenden. Aus der letztgenannten Publikation ist es ferner bekannt, die Rachenweite zwischen den Führungsmitteln verstellbar zu gestalten.

Die Erfindung hat die Aufgabe, die obenerwähnten Schwierigkeiten bzw. Nachteile, die bei der Herstellung besonderer Werkzeuge auftreten, zu beseitigen. Ferner hat die Erfindung den Zweck, die Vorteile der erosiven Bearbeitung mittels einer drahtförmigen bzw. bandförmigen Elektrode auf diese speziell geformten Werkstücke zu übertragen. Ferner bezweckt die Erfindung, mittels einer einfachen konstruktiven Lösung die genannten Vorteile zu erreichen, so daß eines der erfindungsgemäßen Ausführungsbeispiele auch an bereits bestehende Erosionsmaschinen angebaut werden kann.

Diese Aufgabe wird erfindungsgemäß durch die in den Patentansprüchen definierten Merkmale gelöst.

Im folgenden werden Ausführungsbeispiele der Erfindung anhand der Zeichnungen näher erläutert. Es zeigt

Fig. 1a ein Beschneidewerkzeug,

Fig. 1b einen Stempel,

Fig. 2 ein Ausführungsbeispiel der Erfindung, bei dem wahlweise ein oder zwei Führungsmittel der Elektrode an einer Dreheinrichtung angeordnet sind,

Fig. 3a das Schneiden eines Werkstücks mit geschlossener Außenform,

Fig. 3b das Schneiden eines Werkstücks mit geschlossener Innenform,

Fig. 4 ein weiteres Ausführungsbeispiel der Erfindung mit Fühlern bzw. Sensoren an den Führungsmitteln,

Fig. 5 eine erfindungsgemäße Anordnung der Führung der Elektrode zu den und von den Führungsmitteln in Schnittdarstellung entlang der Schnittlinie A-A der Fig. 2,

Fig. 6 in teilweiser Schnittdarstellung eine erfindungsgemäße Anordnung der Versorgung und Entsorgung der Elektrode.

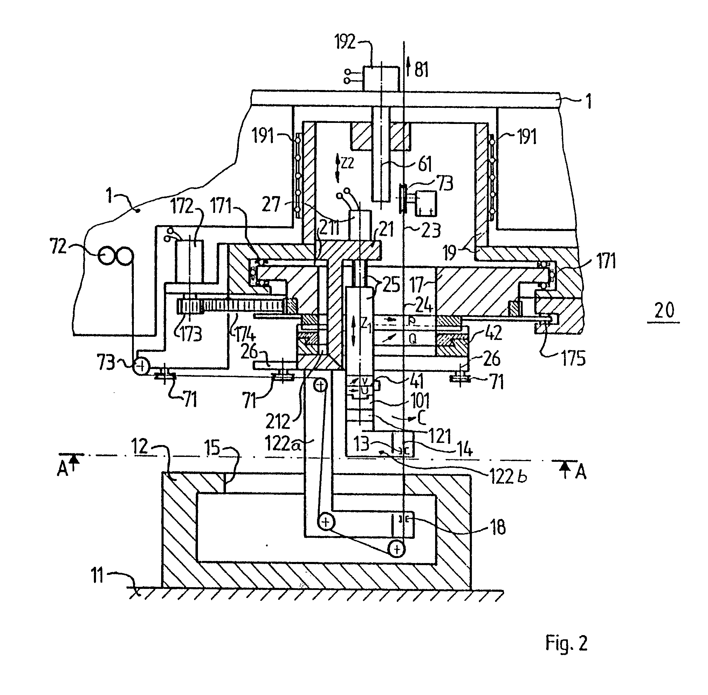

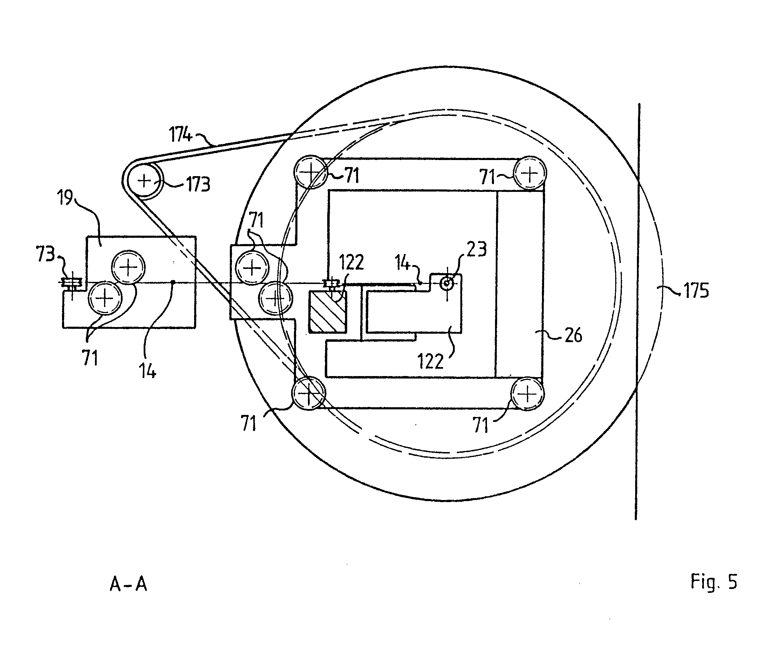

In der Fig. 2 ist in teilweiser Schnittdarstellung der Bearbeitungskopf einer erosiven Schneidemaschine dargestellt. Ein solcher Bearbeitungskopf mit den Führungselementen für die drahtförmige oder bandförmige Elektrode kann ausgebildet sein wie z. B in den US-PS 3 891 819, US-PS 3 928 163 und US-PS 3 987 270 beschrieben sind. Der Arbeitskopf 1, der mit der nicht dargestellten Erosionsmaschine fest verbunden ist, trägt gemäß Fig. 2 in einer besonderen Ausnehmung die Dreheinrichtung 20. Diese Dreheinrichtung ist im Bearbeitungskopf 1 mittels der Lager 191 verschiebbar angeordnet. Der Antriebsmotor 192 bewegt die Spindel 61 in der Weise, daß die gesamte Dreheinrichtung 20 nach oben oder unten verschoben werden kann. Im Motor 192 sind symbolhaft die elektrischen Anschlußklemmen gezeichnet. Dieser Motor kann von einer nicht dargestellten elektrischen Steuereinrichtung betätigt werden. Die Dreheinrichtung 20 besteht aus dem festen Konstruktionsteil 19 und aus dem drehbaren Konstruktionsteil 17. Das drehbare Konstruktionsteil 17 ist im festen Konstruktionsteil 19 im Lager 171 drehbar gelagert. Die Umdrehung erfolgt über den Motor 172, der über angedeutete Klemmen mit einer nicht dargestellten elektrischen Steuerschaltung in Verbindung steht. Das Zahnradritzel 173 bewegt den mit Zähnen versehenen Riemen 174, der in entsprechende Gegenzähne des drehenden Konstruktionsteils 17 eingreift und somit diesen Konstruktionsteil in beliebiger Weise entweder rechts- oder linksherum drehen kann. Eine Bremsvorrichtung 175 ist vorgesehen, die das drehende Konstruktionsteil 17 in der gewünschten Position hält. Das drehende Konstruktionsteil 17 besitzt am unteren Ende einen Kreuztisch 42. Der obere Tisch kann sich in die Richtung P und der untere Tisch in die Richtung Q bewegen. Die beiden Richtungen sind in der Fig. 2 durch Pfeile angedeutet und liegen 90° zueinander versetzt. Am Kreuztisch 42 ist die Trägerkonstruktion 21 vorgesehen, die die Rollen 71 für die drahtförmige bzw. bandförmige Elektrode 14 trägt. Die Besonderheit dieser Rollen 71 wird im Zusammenhang mit der Fig. 5 näher erläutert. Die Elektrode 14 wird von der Versorgungsseite, die in der Fig. 2 als Vorratsspule 72 dargestellt ist, über die Führungsrollen 71, 73 zu den Führungsmitteln 13, 18 und von dort zur Entsorgungsseite 81 transportiert. Während des erosiven Bearbeitungsprozesses bewegt sich die Elektrode 14 mit konstanter Geschwindigkeit von der Versorgungsseite 72 zur Entsorgungsseite 81. Die Führungsmittel 13, 18, die nur symbolhaft dargestellt und beispielsweise so konstruiert sein können, wie es in den obengenannten US-PS beschrieben und gezeichnet ist, sind an Führungsmittel-Supporte 122a, b befestigt. Das eine Führungsmittel 13 ist mit seinem Support 122b an einem Kreuzschlitten 41 angeordnet, der in Richtung V und Richtung U bewegt werden kann. Diese Bewegung ist in Fig. 2 durch Pfeile dargestellt. Mit den Bezugszeichen 101 und 121 sind ein Drehtisch und ein Distanzstück bezeichnet, die später noch näher beschrieben werden.

Der Kreuztisch 41 ist an einem Bewegungsorgan 25 befestigt, das aus einer Hülse und einer Spindel besteht. Die Spindel wird durch den Motor 27 entweder in die eine oder in die andere Richtung bewegt. Durch diese Bewegung erfolgt eine Verschiebung des Kreuzschlittens 41, des Arms 122b und des Führungsmittels 13 in die Richtung Z1. Diese Richtung ist entweder nach oben oder nach unten durch Pfeile dargestellt. Der Motor 27 wird über die Klemmen von einer nicht dargestellten elektrischen Schaltungsanordnung entsprechend gesteuert. Er ist an der Tragkonstruktion 21 befestigt. Diese Tragkonstruktion 21 ist in besonderer Weise entweder mit dem feststehenden Teil 19 oder dem Kreuzschlitten 42 der Dreheinrichtung 20 verbindbar. Dies wird im folgenden nun näher erläutert. Verbindungsmittel 211 und 212, die entweder als Klemm-, Schraub- oder Steckverbindung ausgebildet sein können, stellen die Verbindung entweder mit dem einen Teil 19 oder dem Kreuzschlitten 42 der Dreheinrichtung in der Weise her, daß nur immer über eines der beiden Verbindungsmittel die eine Verbindung hergestellt ist und die andere nicht. Wenn z. B. das Verbindungsmittel 211 die Tragkonstruktion 21 mit dem feststehenden Teil 19 der Dreheinrichtung 20 verbindet, muß das andere Verbindungsmittel 212 die Verbindung der Tragkonstruktion 21 zum Kreuzschlitten 42 auftrennen. Wenn die Tragkonstruktion 21 am Kreuzschlitten 42 befestigt werden soll, so muß das Verbindungsmittel 212 die Verbindung herstellen und das Verbindungsmittel 211 die Verbindung zum feststehenden Teil 19 der Dreheinrichtung 20 auftrennen bzw. beseitigen. Wenn die Tragkonstruktion 21 mit dem Kreuzschlitten 42 bzw. dem Konstruktionsteil 26 verbunden ist, so bewegen sich beide Arme 122a, b bzw. Führungsmittel 13, 18 gemeinsam mit der Dreheinrichtung 20. Wenn die Tragkonstruktion mit dem feststehenden Teil 19 verbunden ist, dann dreht der drehende Teil 17 der Dreheinrichtung 20 nur noch den Arm 122a mit dem Führungsmittel 18 in die eine oder andere Richtung. Das andere Führungsmittel 13 am Arm 122b dreht sich in diesem Fall nicht mit. Diese Alternativen (gemeinsame Drehung der beiden Führungsmittel 13, 18 oder nur Drehung des einen Führungsmittels 18) werden im folgenden im Zusammenhang mit den diversen Arbeitsmethoden näher erläutert. In der Fig. 2 ist das Beschneidewerkzeug der Fig. 1a im Schnitt dargestellt. Mit den Ausführungsbeispielen der Fig. 2, 3b, 4 und 6 soll die Schnittfläche 15 mittels der Elektrode 14 bearbeitet werden. Es sei angenommen, daß das Werkzeug der Fig. 1a bereits in groben Zügen bearbeitet wurde. Nun soll die Elektrode 14 die endgültige Schnittfläche 15 erstellen. Für die folgende Beschreibung der Fig. 2, 3b, 4 und 6 wird das Beschneidewerkzeug 12 der Fig. 1a als Werkstück 12 bezeichnet.

Gemäß Fig. 2 erfolgt die Bearbeitung der Schnittfläche 15 des Werkstücks 12 in der Weise, daß der untere Arm 122 mit dem Führungsmittel 18 in die Öffnung des Werkstücks 12 eingeführt wird. Die Drahtelektrode 14 ist schon vorher von der Versorgungsseite 72 über die diversen Umlenkrollen 71 und 73 zu den Führungsmitteln 18, 13 zur Entsorgung 81 geführt. Im folgenden soll mit einer drahtförmigen Elektrode gearbeitet werden, daher wird auch häufig der Ausdruck Drahtelektrode benutzt. Es sei nun angenommen, daß die Tragkonstruktion 21, an der der obere Arm mit dem Führungsmittel 13 befestigt ist, über das Verbindungsmittel 212 am Konstruktionsteil 26 fest verbunden ist. Vor Beginn des eigentlichen erosiven Schneidens der Fläche 15 des Werkstücks 12 muß die Drahtelektrode 14 ausgerichtet sein. Dies erfolgt dadurch, daß der Kreuzschlitten 41 in die Richtungen U und/oder V solange bewegt wird, bis die Drahtelektrode 14 parallel zur Mittelpunktlinie 24 der Dreheinrichtung 20 liegt. Die Drahtelektrode 14 findet sich bei diesem Positionieren irgendwo innerhalb der durch die Schnittfläche 15 des Werkstücks 12 definierten Öffnung. Wesentlich ist hierbei die Parallelität der Drahtelektrode zu der Mittelpunktlinie 24. Als nächster Schritt wird der Kreuzschlitten 42 in die Richtungen P und Q solange bewegt, bis die Drahtelektrode 14 zwischen den beiden Führungsmitteln 13 und 18 genau mit der Mittelpunktlinie 24 bzw. mit der Drehachse 24 der Dreheinrichtung 20 zentriert ist. Da in diesem Fall die Tragkonstruktion 21 mit dem Konstruktionsteil 26 und somit auch mit dem unteren Arm 122 des Führungsmittels 18 verbunden ist, bewegen sich beide Führungsmittel gemeinsam mit dem Kreuzschlitten 42. Das bedeutet, daß die Parallelität der Drahtelektrode 14 zur Mittelpunktlinie 24 durch die Bewegung des Kreuzschlittens 42 überhaupt nicht geändert wird. Wenn nun die Drahtelektrode 14 mit der Mittelpunktlinie 24 übereinstimmt, werden die Arme 122a, b der beiden Führungsmittel 13 und 18 so eingestellt, daß die Arme 122a, b genau im rechten Winkel zur Schnittfläche 15 des Werkstücks 12 angeordnet sind. Bei der nun folgenden erosiven Bearbeitung der Schnittfläche 15 bewegt sich der gesamte Bearbeitungskopf 1 der Fig. 2 so, wie er durch eine elektronische Steueranlage gesteuert wird. Solche elektronischen Steueranlagen sind hinreichend bekannt und werden im folgenden nicht näher erläutert. Die elektronischen Steueranlagen sind beispielhalber beschrieben in der US-PS 3 859 186, US-PS 3 873 102, US-PS 3 975 607 und US-PS 4 045 641. Bei der Bearbeitung der Schnittfläche 15 des Werkstücks 12 wird darauf geachtet, daß die Arme stets im rechten Winkel zur Schnittfläche sind. Der Abstand zwischen den beiden Führungsmitteln 13 und 18 wird als Rachenweite bezeichnet und soll so klein als möglich gehalten werden, damit die Drahtelektrode 14 während der erosiven Bearbeitung nicht unnötig vibrieren kann. Daher ist es öfters auch notwendig, daß die beiden Führungsmittel der dreidimensionalen Form der Schnittfläche 15 folgen müssen ohne hierbei die Rachenweite zu ändern. Dies erfolgt dadurch, daß der Motor 192 der Fig. 2 über die Spindel 61 die gesamte Baugruppe bestehend aus dem feststehenden Teil 19 und dem zur Dreheinrichtung 20 gehörenden Drehachsenträger nach oben oder nach unten bewegen kann. Die sogenannte »Topographie« des Werkstücks 12 kann auch dadurch berücksichtigt werden, daß der Motor 27 den oberen Arm 122b des Führungsmittels 13 nach oben oder nach unten bewegt. Hierbei ist jedoch zu berücksichtigen, daß die Rachenweite zwischen den beiden Führungsmitteln 13 und 18 sich ändert. Die Rachenweite darf nicht so groß anwachsen, daß die Elektrode 14 während des Erosionsprozesses vibriert. Während des gesamten Erosionsprozesses ist die Elektrode 14 immer in der Drehachse 24 bzw. in der Drahtachse 23 zu halten. Hierdurch ist gewährleistet, daß die Drahtelektrode gegenüber dem Werkstück 12 ausgerichtet bleibt, wenn sich Teil 17 dreht. Diese Bedingung muß auch eingehalten werden, wenn konisch geschnitten werden soll. Unter Konischschneiden wird verstanden, daß die Elektrode 14, die zwischen den Führungsmitteln 13 und 18 gespannt ist einen bestimmten Winkel zur Schnittfläche des Werkstücks 12 einnimmt. Durch dieses konische Schneiden ergibt sich ein Schrägungswinkel der Schnittfläche 15. Die Winkeleinstellung der Elektrode 14 wird dadurch vorgenommen, daß der Kreuztisch 41 in die Richtungen U und/oder V solange bewegt wird, bis die Elektrode 14 den gewünschten Winkel einnimmt. In diesem Fall liegt die Elektrode 14 zwischen den Führungsmitteln 13 und 18 nicht mehr parallel bzw. koaxial zu den Mittelpunktlinien 23, 24. Beim Konischschneiden liegt nur noch ein Punkt der Drahtachse 23 auf der Drehachse 24. Dieser Schnittpunkt, der im Bereich zwischen den Führungsmitteln 13, 18 liegt, bildet den Bezugspunkt für die Steuerung bei der konischen Bearbeitung des Werkstücks. Entsprechend der Winkelgröße und der Distanz zu diesem Referenzpunkt muß die Lage des unteren Führungsmittels 18 mit Hilfe der Verstellvorrichtungen für die Richtungen P und Q verstellt werden. Die relative Lage des oberen Führungsmittels 13 wird dann relativ zu den unteren Führungsmitteln 18 durch die Verstellvorrichtungen für die Richtungen U und V gesteuert und eingestellt.

Der Vollständigkeit halber wird noch darauf hingewiesen, daß die Rachenweite zwischen den Führungsmitteln 13 und 18 durch Distanzstücke 121 verändert werden können. Solche Distanzstücke sind gemäß Fig. 2 im Arm 122 vorgesehen. Die Anordnung von einem oder von mehreren Distanzstücken in einem oder in mehreren Armen 122 ist ohne weiteres möglich. Dies richtet sich nach dem jeweiligen Bearbeitungsfall. Solche Distanzstücke sind im allgemeinen bekannt.

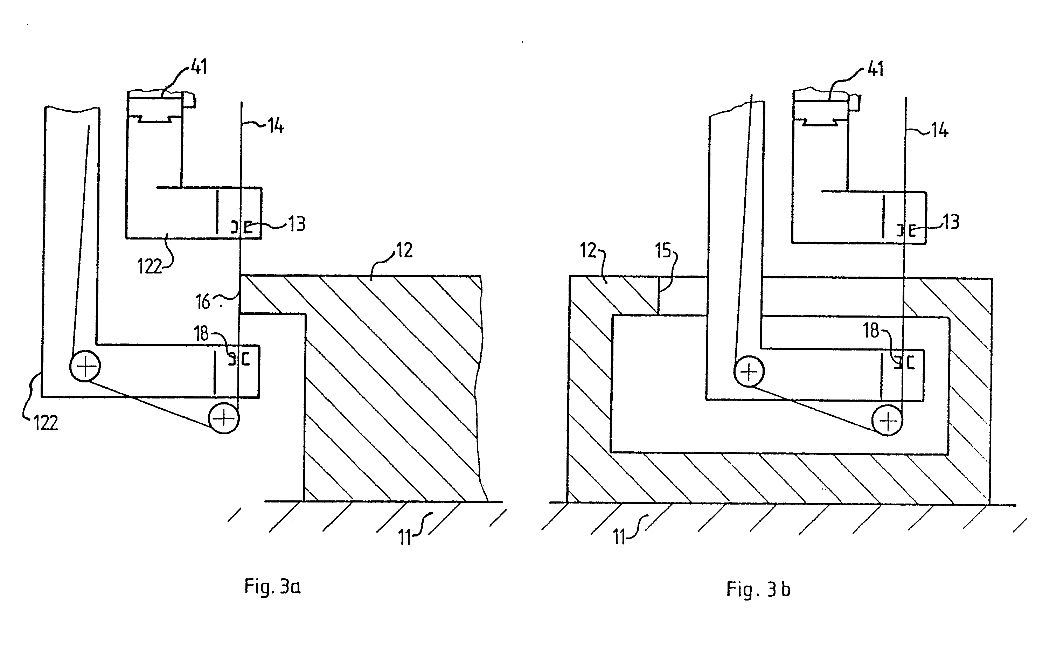

Die Fig. 3a zeigt den Stempel 12 der Fig. 1b in Schnittdarstellung. Der Stempel ist ebenfalls auf dem Werkzeugtisch 11 befestigt. Die Drahtelektrode 14 schneidet die geschlossene Außenform 16 des Stempels 12. Die Elektrode 14 kann in gleicher Weise wie im Zusammenhang mit der Fig. 2 beschrieben die Außenform 16 zylindrisch (wie in Fig. 3a gezeigt) oder auch konisch schneiden. Die Bewegungsmöglichkeiten der Arme 122 der beiden Führungsmittel 13, 18 sind in gleicher Weise vorhanden wie bereits beschrieben. Sie werden nicht behindert durch irgendwelche Spannmittel, die den Stempel 12 am Tisch 11 befestigen. Der Vollständigkeit halber sei noch erwähnt, daß in der Fig. 3a der obere Arm 122 mit dem Führungsmittel 13 keinen Drehtisch 101 und kein Distanzstück 121 enthält. Hiermit soll angedeutet werden, daß die Teile 101 und 121 nur in besonderen Fällen wie z. B. bei der Fig. 2 verwendet werden können.

Die Fig. 3b zeigt eine ähnliche Schnittdarstellung wie der untere Teil der Fig. 2 das Werkstück 12 ist in Fig. 1a perspektivisch dargestellt. Mit der Fig. 3b soll gezeigt werden, daß bei jeder »Topographie« des Werkstücks 12 die beiden Arme 122 der Führungsmittel 13, 18 bei gleicher Rachenweite (d. h. Abstand der Führungsmittel von einander) die Erosion durchführen kann. Dies erfolgt dadurch, daß gemäß Fig. 2 nur der Motor 192 und nicht der Motor 27 betätigt werden. Die Drahtelektrode 14 besitzt eine unbegrenzte Zugänglichkeit zu den verschiedenen angeordneten Schnittlinien 15, die in der Fig. 3b nicht konisch vorgezeichnet ist.

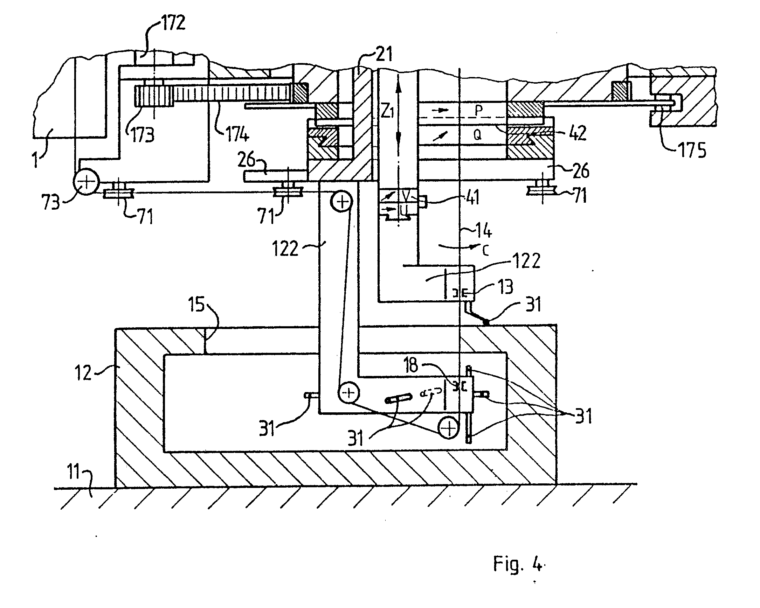

Die Fig. 4 zeigt ein weiteres Ausführungsbeispiel, welches Fühler bzw. Sensoren 31 an den Armen 122 der Führungsmittel 13, 18 aufweisen. Diese Sensoren bzw. Fühler sind als solche bekannt. Sie werden wie in der Fig. 4 gezeigt an den Armen angebracht. Der Fühler am oberen Arm 132 (Führungsmittel 13) erzeugt ein entsprechendes Signal wenn er mit der Oberfläche des Werkstücks 12 Kontakt bekommt. Am unteren Arm 122 (Führungsmittel 18) sind mehrere Fühler bzw. Sensoren 31 in verschiedenen Arten angeordnet. Diese Fühler dienen dazu, eine Kollision mit den Innenwänden des Werkstücks 12 zu vermeiden. Wenn sie in Berührung mit einer dieser Innenflächen gelangen, erzeugen sie ein elektrisches Signal. Die elektrischen Signale der Fühler 31 gelangen auf die Steueranlage, die die Motoren 192, 27 oder 172 (Fig. 2) in entsprechende Bewegung setzen. Der Motor 192 dient für die Bewegung beider Führungsmittel 13, 18, was in der Fig. 2 mit Z2 bezeichnet wurde. Der Motor 27 dient zur Bewegung nur des oberen Führungsmittels 13, was in den Fig. 2 und 4 mit Z1 dargestellt ist. Der Motor 172 dient zur Drehung der Dreheinrichtung 20, was gemäß Fig. 2 und 4 über den Antrieb 173, 174 geschieht. In der Fig. 4 ist zum Unterschied der Fig. 2 die Tragkonstruktion 21 permanent am Konstruktionsteil 26 befestigt. Es soll hiermit gezeigt werden, daß wahlweise Befestigungsmittel 211 und 212 der Fig. 2 nicht in jedem Fall notwendig sein müssen. Der Motor 27 ist an der Tragkonstruktion 21 befestigt und betätigt den oberen Arm 122 des Führungsmittels 13 in die Richtungen Z1. Die Tragkonstruktion 21 ist nicht mit dem feststehenden Teil 19 der Dreheinrichtung sondern nur mit dem Konstruktionsteil 26 verbunden. In diesem Fall bewegen sich also beide Arme 122, wenn der Motor 192 über die Spindel 61 (Fig. 2) die gesamte Dreheinrichtung nach oben oder unten in die Richtungen Z2 bewegt. In der Fig. 4 haben die mit der Fig. 2 übereinstimmenden Elemente die gleichen Bezugszahlen und werden hier nicht mehr erwähnt.

Die Fig. 5 zeigt einen Schnitt nach den Linien A-A der Fig. 2. Die Blickrichtung ist durch die Pfeile angedeutet, d. h. sie ist von unten nach oben, Fig. 2. In Fig. 5 erkennt man die Drahtelektrode, die von der Versorgungsseite über die Rolle 73 die Rollen 71 durchläuft. Das erste Rollenpaar befindet sich auf dem feststehenden Teil der Dreheinrichtung. Das folgende Rollenpaar 71 befindet sich wie die anderen Einzelrollen 71 auf dem Konstruktionsteil 26, das sich mit dem drehenden Teil 17 der Dreheinrichtung 20 in jede beliebige Stellung verdrehen kann. Der untere Arm 122 mit dem Führungsmittel 18 ist geschnitten dargestellt. Der obere Arm 122 mit dem Führungsmittel 13 ist nicht geschnitten. Die Drahtelektrode 14 gelangt gemäß Fig. 5 vom zweiten Rollenpaar 71 auf die Rolle des unteren Arms 122 und wird zum Führungsmittel 18 geführt. Von dort gelangt sie zum Führungsmittel 13 des oberen Arms 122 und weiter zur Entsorgung 81. Die Drahtelektrode 14 befindet sich genau auf der Mittelpunktlinie 23 der Dreheinrichtung 20. Es sei nun angenommen, daß im Laufe des Erosionsprozesses die Schnittlinie 15 bzw. 16 des Werkstücks 12 eine Drehung der Dreheinrichtung 20 verlangt. Dies erfolgt durch Ansteuerung des Motors 172 der über das Zahnrad 173 und den Zahnriemen 174 den drehenden Teil 17 der Dreheinrichtung in entsprechende Drehbewegung versetzt. Zur Illustrierung wird nun angenommen, daß der drehende Teil 17 und somit auch das Konstruktionsteil 26 zusammen mit den Armen 122 im Uhrzeigersinn gedreht werden. Da die Versorgung 72 der Drahtelektrode 14 sowie die Rolle 73 und das erste Rollenpaar 71 am gleichen Ort bleiben übernimmt die Umlenkrolle 71, die in der Fig. 5 unterhalb des geschnittenen Arms 122 sich befindet die weitere Führung der Drahtelektrode 14 zum zweiten Rollenpaar 71 und weiter zu den Armen 122. Wenn sich im Laufe des Erosionsprozesses die Dreheinrichtung 20 noch weiter nach rechts drehen muß, so übernimmt die nächste Rolle 71, die in der Fig. 5 rechts unten vorgesehen ist, die Führung der Drahtelektrode 14 von der Versorgungsseite. Wenn die Entsorgung 81 der Drahtelektrode so vorgesehen ist, wie in der Fig. 2 dargestellt, d. h. wenn die Drahtelektrode 14 auf der Mittelpunktlinie 23 der Dreheinrichtung 20 sich befindet, so benötigt die Entsorgung 81 der Drahtelektrode 14 keine besonderen Umlenkrollen wie z. B. in der Fig. 5 für die Versorgungsseite gezeichnet ist. Wenn jedoch die Entsorgung 81 der Drahtelektrode 14 so konstruiert ist, daß sie nicht mehr eher auf der Mittelpunktlinie 23 der Dreheinrichtung 20 liegt, so muß auch für die Entsorgungsseite eine Vorrichtung vorgesehen sein wie in Fig. 5 gezeichnet ist.

Wenn die Versorgung 72 der Drahtelektrode 14 auf der Mittellinie 23 bzw. in der Nähe der Mittelpunktlinie angeordnet werden kann, dann benötigt man für die Versorgungsseite der Drahtelektrode nicht mehr die Vorrichtung der Fig. 5. Das gleiche gilt auch dann, wenn die Versorgung 72 und die Entsorgung 81 an der Dreheinrichtung 20 angebracht sind. In diesem Fall bleibt die relative Lage der Versorgung und der Entsorgung zu den Führungsmitteln 13, 18 konstant. In diesem Fall wäre eine Vorrichtung gemäß Fig. 5 nicht erforderlich.

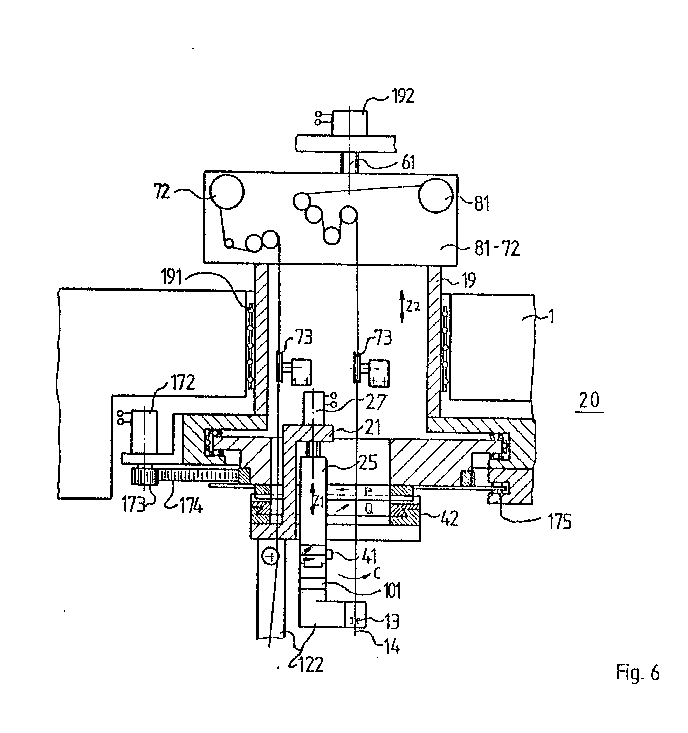

Die Fig. 6 zeigt ein Ausführungsbeispiel, bei dem die Versorgung 72 und Entsorgung 81 der Drahtelektrode 14 möglichst nahe an der Mittelpunktlinie 23 der Dreheinrichtung vorgesehen sind. Eine solche Anordnung ist durch entsprechende Umlenkrollen ohne weiteres realisierbar. Diese Umlenkrollen befinden sich auf dem feststehenden Teil 19 der Dreheinrichtung 20. Es ist auch ohne weiteres denkbar, daß die Versorgung und Entsorgung der Drahtelektrode an dem drehenden Teil 17, z. B. am Konstruktionsteil 26 angebracht werden kann. Die Fig. 6 wird nicht näher diskutiert, da die Konstruktionselemente gleich sind wie in den Fig. 2, 3 und 4. Sie weisen daher die gleichen Bezugszahlen auf.

**Patentansprüche:**

1. Erosive Schneidmaschine zum Schneiden an einem durch Werkstückhalter befestigten Werkstück (12) mittels einer von zwei Führungsmitteln (13, 18) geführten draht- oder bandförmigen Elektrode (14), wobei die Führungsmittel (13, 18) mit einer Dreheinrichtung (17) in Verbindung stehen, deren Winkelposition um eine Drehachse (24) mit Hilfe von Steuerungsmitteln (172) einstellbar ist, wobei die Drehachse (24) mindestens einen Punkt mit der Elektrodenachse (23) gemeinsam hat, wobei an den Führungsmitteln (13, 18) je ein Führungsmittel-Support (122a, 122b) vorgesehen ist, und wobei eine erste Verstelleinrichtung (19, 191, 61) zur Einstellung von mit der Dreheinrichtung (17) verbundenen Teilen (18) längs einer ersten Führungsachse (Z2) vorgesehen ist, wobei die erste Führungsachse (Z2) parallel zur Drehachse (24) verläuft, dadurch gekennzeichnet, daß am ersten Führungsmittel-Support (122b) ein steuerbarer Kreuzschlitten (41) zur gesteuerten Einstellung von zwei Verstellkoordinaten (U, V) zur Verstellung der mit ihm verbundenen ersten Führungsmittel (13) vorgesehen ist, daß am zweiten Führungsmittel-Support (122a) ein zweiter steuerbarer Kreuzschlitten (42) zur gesteuerten Einstellung der zweiten Führungsmitteln (18) längs zweiten Verstellkoordinaten (P, Q) vorgesehen ist, daß mindestens einer der Kreuzschlitten (42) mit der Dreheinrichtung (17) verbunden ist, und daß eine zweite Verstelleinrichtung (21, 25, 27) zur gesteuerten kontinuierlichen Verstellung des Abstandes zwischen den ersten und den zweiten Führungsmitteln (13, 18) längs einer zweiten Verstellachse (Z1) vorgesehen ist, wobei die zweite Verstellachse (Z1) ebenfalls parallel zur Drehachse (24) der Dreheinrichtung (17) verläuft.

2. Erosive Schneidmaschine nach Anspruch 1, dadurch gekennzeichnet, daß die erste Verstelleinrichtung (19, 191, 61) mit Steuermitteln (192) zur gesteuerten kontinuierlichen Einstellung der mit der Dreheinrichtung verbundenen Teile (42, 122a, 18) während des Schneidvorganges in Verbindung steht.

3. Erosive Schneidmaschine nach Anspruch 1, gekennzeichnet durch Verbindungsmittel (211, 212) zur wahlweisen Verbindung der zweiten Verstellachse (Z1) des ersten Kreuzschlittens (41) mit dem zweiten Kreuzschlitten (42), oder mit einem nicht drehbaren Führungsteil (19, 20) der Dreheinrichtung (17).

**Claims**

1. An electro-erosion cutting machine for cutting a workpiece (12) fixed by workpiece holders by means of a wire or band-shaped electrode (14) guided by means of two guide means (13, 18);
wherein the guide means (13, 18) are connected to a rotary device (17) whose angular position is settable about an axis of rotation (24) by means of control means (172);
wherein the axis of rotation (24) has at least one point common to the electrode axis (23);
wherein a respective guide means support (122a, 122b) is provided on the guide means (13, 18);
wherein a first adjusting device (19, 191, 61) is provided for setting components (18) connected to the rotary device (17) along a first guide axis (Z2); and
wherein the first guide axis (Z2) extends parallel to the axis of rotation (24);

characterized in that:

a controllable cross-slide (41) is provided on the first guide means support (122b) for controllably setting two adjustable coordinates (U, V) for adjusting the first guide means (13) connected with the cross-slide;
a second controllable cross-slide (42) is provided on the second guide means support (122a) for controllably setting the second guide means along second adjustable coordinates (P, Q);
at least one of the cross-slides (42) is connected with the rotary device (17);
a second adjusting device (21, 25, 27) is provided for controllably and continuously adjusting the distance between the first and the second guide means (13, 18) along a second adjustment axis (Z1); and
wherein the second adjustment axis (Z1) also extends parallel to the axis of rotation (24) of the rotary device (17).

2. Electro-erosion cutting machine according to claim 1, characterized in that: the first adjusting device (19, 191, 61) is connected to control means (192) for controllably and continuously setting components (42, 122a, 18) connected with the rotary device (17) during the cutting operation.

3. Electro-erosion cutting machine according to claim 1, characterized by connection means (211, 212) for selectively connecting the second adjustment axis (Z1) of the first cross-slide (41) with the second cross-slide (42) or with a non-rotating guide component (19, 20) of the rotary device (17).

## Revendications

1. Machine à découper à électro-érosion permettant de découper une pièce (12), maintenue par un dispositif porte-pièce, au moyen d'une électrode (14) en forme de fil ou de bande guidée par deux dispositifs de guidage (13, 18), ces dispositifs de guidage (13, 18) étant reliés à un dispositif rotatif (17) dont la position angulaire autour d'un axe de rotation (24) peut être réglée au moyen de dispositifs de commande (172), l'axe de rotation (24) ayant en commun un point au moins avec l'axe de l'électrode (23), chacun des dispositifs de guidage (13, 18) comportant un support (122a, 122b) de dispositif de guidage et l'appareil comportant, le long d'un premier axe de guidage (Z2), un premier dispositif de réglage (19, 191, 61) pour la mise en place des pièces (18) reliées au dispositif rotatif (17), le premier axe de guidage (Z2) étant parallèle à l'axe de rotation (24), caractérisée en ce qu'au premier support (122b) de dispositif de guidage est associé un chariot à glissières (41) qui peut être commandé pour la commande du réglage de deux coordonnées de réglage (U, V) pour le réglage du premier dispositif de guidage (13) auquel il est lié, en ce qu'un deuxième support (122a) de dispositif de guidage est associé un deuxième chariot à glissières (42) qui peut être commandé pour la commande du réglage du deuxième dispositif de guidage (18) le long d'autres coordonnées de réglage (P, Q), en ce que l'un au moins (42) des chariots à glissières est relié au dispositif rotatif (17) et que la machine comprend un deuxième dispositif de réglage (21, 25, 27) pour la commande du réglage continu de la distance entre le premier et le deuxième dispositif de guidage (13, 18) le long d'un deuxième axe de réglage (Z1), ce deuxième axe de réglage (Z1) étant également parallèle à l'axe de rotation (24) du dispositif rotatif (17).

2. Machine à découper à électro-érosion selon la revendication 1, caractérisé en ce que le premier dispositif de réglage (19, 191, 61) est, pendant l'opération de découpe, relié à un dispositif de commande (192) pour la commande du réglage continu des pièces (42, 122a, 18) reliées au dispositif rotatif.

3. Machine à découper à électro-érosion selon la revendication 1, caractérisé en ce qu'elle comporte un dispositif de liaison (211, 212) permettant de relier, au choix, le deuxième axe de réglage (Z1) du premier chariot à glissières (41) au deuxième chariot à glissières (42) ou à une pièce de guidage non rotative (19, 20) du dispositif rotatif (17).

Fig. 1a

Fig. 1b

16

12

Fig. 2

Fig. 3a

Fig. 3b

0 028 595

Fig. 4

A-A                                                                          Fig. 5

0 028 595

Fig. 6